# FASCICULE DE BREVET EUROPEEN

(11) **EP 0 578 553 B1**
(45) Date de publication et mention de la délivrance du brevet: **28.05.1997**
(21) Numéro de dépôt: 93401736.9
(22) Date de dépôt: 05.07.1993
(51) Int. Cl.: C03B 19/10, C03B 37/012, C03C 1/00, C03B 8/02

(54) **Procédé de fabrication d'une poudre de silice et application d'une telle poudre à la réalisation d'une préforme pour fibre optique**
Verfahren zum Herstellen eines Siliciumdioxydpulvers und seine Verwendung bei der Herstellung einer optischen Faservorform
Process of making a silica powder and use of such a powder in the manufacture of optical fibre preforms

(30) Priorité: 07.07.1992 FR 9208369
(43) Date de publication de la demande: 12.01.1994
(73) Titulaire: ALCATEL N.V., NL-1077 XX Amsterdam (NL)
(72) Inventeur: Campion, Jean-Florent, F-91290 Arpajon (FR)
(74) Mandataire: Laroche, Danièle

(56) Documents cités:
- EP-A- 0 271 281
- EP-A- 0 360 479
- GB-A- 2 103 202
- GB-A- 2 229 715
- US-A- 3 954 431
- US-A- 4 042 361
- JOURNAL OF THE AMERICAN CERAMIC SOCIETY vol. 66, no. 10, Octobre 1983, COLUMBUS US pages 683 - 688 E.M.RABINOVICH ET AL. 'Preparation of High-Silica Glasses from Colloidal Gels: I, Preparation for Sintering and Properties of Sintered Glasses'
- DATABASE WPIL Section Ch, Week 05, 1983 Derwent Publications Ltd., London, GB; Class L01, AN 83-10489K & JP-A-57 205 334 (NT&T) 16 Décembre 1982

## Description

La présente invention concerne un procédé de fabrication d'une poudre de silice, destinée plus particulièrement mais non exclusivement à la réalisation d'une préforme de fibre optique.

On vise essentiellement le procédé POD c'est-à-dire une technique de dépôt plasma par projection et fusion d'une poudre de silice sur une préforme primaire. Ce procédé est décrit par exemple dans l'article de Le Sergent et al: "Preform Technologies for Optical Fibers" Electrical Communication. Vol 62, N° 3/4 - 1988, page 238.

Jusqu'à présent les poudres de silice que l'on met en oeuvre sont de deux types.

Le premier type est une poudre de quartz naturel ayant une granulométrie satisfaisante, mais pouvant présenter aléatoirement des inclusions susceptibles de fragiliser la préforme ultérieure.

Le second type est une poudre ou suie synthétique présentant une grande pureté mais dont les grains sont si fins (diamètre de grain inférieur à 100nm), que son utilisation rend le procédé POD trop long et trop coûteux. Dans toute la suite, on appellera "suie synthétique de silice" ce second type de poudre. Une telle suie peut être obtenue par exemple par un procédé MCVD; elle peut être aussi pyrogénée, comme la suie vendue sous la dénomination Aerosil Ox-50 et 200 par la Société DEGUSSA.

La demande de brevet Européen EP-A-0271281 décrit par ailleurs une méthode sol-gel pour réaliser une poudre de silice pour préforme de fibre optique. Cette méthode consiste à disperser dans de l'eau de la suie synthétique de surface spécifique égale à 200 m²/g, et à raison de 25% en poids. Le gel obtenu est fractionné par des moyens mécaniques et les granulés obtenus sont séchés. On constate que ces granulés sont extrêmement friables, ce qui rend difficile toute opération ultérieure de tamisage.

La présente invention a pour but d'éviter cet inconvénient et propose un procédé sol-gel aboutissant à des granulés de silice peu friables, présentant une granulométrie et une pureté bien adaptées au procédé POD.

La présente invention a pour objet un procédé de fabrication d'une poudre de silice, par une méthode sol-gel, dans lequel,
- on réalise une suspension dans l'eau de suie synthétique de silice, de surface spécifique inférieure à 80 m²/g à raison de 50% à 75% en poids de silice,
- on gélifie ladite suspension,
- on sèche sous micro-ondes le gel obtenu,
- on fractionne le gel-sec en granulés de silice de diamètre compris entre 10 µm et 1 mm, présentant une densité apparente de l'ordre de 0,5 g/cm³ à 0,6 g/cm³ et une porosité inférieure à 20%,
- et on effectue un tamisage entre 100 µm et 500 µm.

La silice du gel est transparente aux micro-ondes à la température de séchage. Le gel est séché dans sa masse, sans aucune formation de croûte. Après fractionnement mécanique les granulés obtenus sont peu fragiles et supportent sans se désagréger un tamisage ultérieur.

Selon un mode de mise en oeuvre, on réalise la gélification par chauffage de ladite suspension vers 40°C, on sèche le gel obtenu sous vide et dans un four à micro-ondes et on le fractionne par broyage à l'aide de billes en téflon ou par découpage à l'aide d'une hélice.

Les granulés poreux obtenus par le procédé selon l'invention peuvent être utilisés directement dans la torche à plasma du procédé POD.

De préférence, on projette en même temps que ces granulés, un gaz fluorant, par exemple de type SF₆; le débit de ce gaz peut être réglé de façon que le pourcentage (en poids) de fluor incorporé dans la silice varie entre 0,3% et 1,5%.

Il est possible d'ajouter à ladite suspension, sous forme de poudres d'oxydes ou de sels solubles, différents dopants destinés à modifier l'indice optique et les propriétés mécaniques de la préforme ultérieure; ces dopants (titane, magnésium, calcium, aluminium, baryum, strontium, plomb, phosphore), seuls ou en mélange, sont ajoutés de manière à se trouver en proportion pondérale inférieure à 20%.

Selon une variante de mise en oeuvre perfectionnée l'on effectue dans un four une densification desdits granulés de silice par le traitement thermique suivant:
- Montée de 20°C à 800°C sous oxygène avec une vitesse comprise entre 300°C et 500°C/heure.
- Montée de 800°C jusqu'à une température T comprise entre 1250°C et 1350°C sous atmosphère d'hélium avec un palier isotherme de 1 à 5 heures la température T, la densité des granulés de silice étant en fin de traitement thermique de l'ordre de 2,2 g/cm³.

On peut prévoir en outre, en vue d'éliminer les groupements OH une phase intermédiaire à 800°C dans ledit traitement thermique, avec un traitement sous chlore ou chlorure de thionyle pendant une durée comprise entre 0,5 et 2 heures, suivi d'un traitement vers 1000°C - 1200°C, pendant 1 heure environ, sous oxygène ou mélange hélium/oxygène, destiné à éliminer les groupements Cl.

Pendant la seconde phase du traitement thermique, on peut également mélanger à l'hélium un gaz fluorant choisi parmi SiF₄, CCl₂F₂, HF, SF₆, NF₃, de manière à incorporer dans lesdits granulés 0,1% à 3% de fluor.

Les traitements de densification des granulés qui viennent d'être définis permettent d'accroître la vitesse de leur dépôt par le procédé POD, sur une préforme primaire.

D'autres caractéristiques et avantages de la présente invention apparaîtront au cours de la description suivante d'exemples de mise en oeuvre donnés à titre illustratif mais nullement limitatif.

### EXEMPLE 1 :

On réalise une suspension de 70 kg de silice dans 30 kg d'eau désionisée. Il s'agit de silice pyrogénée de type Aérosil OX-50 de la Société DEGUSSA présentant une surface spécifique de 50 m²/g.

Le PH de la suspension est égal à 3. On chauffe à 40°C et il se forme un gel que l'on sèche sous vide pendant 8 heures dans une enceinte micro-ondes maintenue à 70°C.
Le vide est de l'ordre de 100 mm de mercure au début du séchage.
La puissance micro-onde est de 8 kwatts au début du séchage et elle décroît jusqu'à 1 kwatt en fin de séchage.

On obtient un gâteau séché de manière très homogène sans croûte superficielle.

On le fractionne à l'aide d'une hélice qui tourne à une vitesse comprise entre 40 et 100 tours par minute.

On obtient des granulés de silice de diamètres compris entre 50 µm et 1 mm, la granulométrie étant centrée sur 300 µm. Leur densité est de 0,5 g/cm³.

Après un tamisage entre 100 µm et 500 µm on obtient des granulés représentant 70% de la silice introduite initialement. Les granulés ont une porosité de 10% environ.

On utilise une telle poudre dans la torche à plasma d'un procédé POD avec un débit compris entre 370 et 500 g/heure; la projection est effectuée sur une préforme primaire de diamètre 16 mm devant être porté à 24 mm. La vitesse de croissance de la préforme est de 0,8 mm par heure et par mètre, avec un rendement de matière de 35% à 45%.

### EXEMPLE 2 :

On prend la poudre de l'exemple 1 et on la projette sur une préforme primaire de 1 mètre de longueur et de diamètre 18 mm devant être porté à 24mm.

On projette également dans la torche un gaz fluorant tel que SF₆, avec un débit de compris entre 0,5 et 3 litres par minute. Selon ce débit le pourcentage de fluor incorporé dans la silice déposée est compris entre 0,3% et 1,5%. La vitesse de dépôt est de 0,70mm par heure et par mètre.

### EXEMPLE 3:

On prend la poudre de l'exemple 1 et on lui fait subir le traitement de densification suivant dans un four électrique:
- Montée de 20°C à 800°C sous oxygène avec une vitesse de chauffage de 300°C/heure.
- Traitement sous chlore à 800°C pendant 1 heure.
- Montée de 800°C à 1350°C sous hélium.
- Palier à 1350°C pendant 3 heures.

Grâce à cette densification, la vitesse de croissance de la préforme précitée dans l'exemple 1 passe à 3 mm par heure et par mètre, avec un rendement de matière de 70% à 85%.

### EXEMPLE 4:

On prend la poudre de l'exemple 1 et on lui fait subir le traitement de densification et de fluoration suivant dans un four électrique:
- Montée de 20°C à 800°C sous oxygène avec une vitesse de chauffage de 300°C/heure.
- Traitement sous atmosphère d'hélium et de SiF₄ de 800°C à 1350°C.
- Palier isotherme à 1350°C pendant 2 heures.

Pour 200 grammes de silice le débit de SiF₄ est compris entre 0,5 litre et 2 litres par heure.

Le pourcentage de fluor incorporé est de 1% en poids, si le débit de SiF₄ est de 0,5 litre par heure et le débit d'hélium de 2 litres par heure.

On utilise ce type de poudre pour la recharge par procédé POD d'une préforme de 1 mètre de longueur et de diamètre 18mm devant être porté à 30mm. Le débit de silice est de 0,4 Kg par heure.
La vitesse de dépôt est de 2,8 mm par heure et par mètre. La silice déposée contient toujours 1% en poids de fluor, ce qui correspond à un écart d'indice optique Δn= - 5x10⁻³ par rapport à la silice pure. Le rendement de matière est compris entre 65% et 80%.

Il est très intéressant de constater que le pourcentage de fluor contenu dans la poudre est conservé intégralement dans la silice déposée.

Bien entendu l'invention n'est pas limitée aux modes de réalisation proposés ci-dessus. On pourra, sans sortir du cadre de l'invention, remplacer tout moyen par un moyen équivalent.

## Revendications

1. Procédé de fabrication d'une poudre de silice, par une méthode sol-gel, dans lequel,
- on réalise une suspension dans l'eau de suie synthétique de silice, de surface spécifique inférieure à 80 m²/g à raison de 50% à 75% en poids de silice,
- on gélifie ladite suspension,
- on sèche sous micro-ondes le gel obtenu,
- on fractionne le gel-sec en granulés de silice de diamètre compris entre 10 µm et 1 mm, présentant une densité apparente de l'ordre de 0,5 g/cm³ à 0,6 g/cm³ et une porosité inférieure à 20%,
- et on effectue un tamisage entre 100 µm et 500 µm.

2. Procédé de fabrication selon la revendication 1, caractérisé par le fait que l'on réalise la gélification par chauffage de ladite suspension vers 40°C, on sèche le gel obtenu sous vide dans un four micro-ondes et on le fractionne par broyage à l'aide de billes en téflon, ou découpage par une hélice.

3. Procédé de fabrication selon l'une des revendications 1 et 2, caractérisé par le fait que l'on ajoute dans ladite suspension, sous forme de poudre d'oxyde ou de sel soluble au moins un dopant choisi parmi le titane, le magnésium, le calcium, l'aluminium, le baryum, le strontium, le plomb, le phosphore.

4. Procédé de fabrication selon l'une des revendications 1 à 3, caractérisé par le fait que l'on effectue dans un four une densification desdits granulés de silice par le traitement thermique suivant:
- Montée de 20°C à 800°C sous oxygène avec une vitesse comprise entre 300°C et 500°C/heure.
- Montée de 800°C jusqu'à une température T comprise entre 1250°C et 1350°C sous atmosphère d'hélium avec un palier isotherme de 1 à 5 heures à la température T, la densité des granulés de silice étant en fin de traitement thermique de l'ordre de 2,2 g/cm³.

5. Procédé de fabrication selon la revendication 4, caractérisé par le fait que l'on prévoit une phase intermédiaire dans ledit traitement thermique avec un traitement sous chlore ou chlorure de thionyle à 800°C pendant une durée comprise entre 0,5 et 2 heures, suivi d'un traitement vers 1000°c à 1200°c, pendant 1 heure environ, sous oxygène ou mélange hélium/oxygène, destiné à éliminer les groupements Cl.

6. Procédé de fabrication selon la revendication 4, caractérisé par le fait que l'on mélange à l'hélium un gaz fluorant choisi parmi SiF₄, CCl₂F₂, HF, SF₆, NF₃, de manière à incorporer dans lesdits granulés 0,1% à 3% de fluor.

7. Application d'une poudre de silice obtenue par le procédé selon l'une des revendications précédentes, caractérisé par le fait qu'elle est projetée sur une préforme primaire par une torche à plasma d'un procédé POD.

8. Application d'une poudre de silice obtenue par le procédé selon l'une des revendications 1 et 2, caractérisée par le fait qu'elle est projetée sur une préforme primaire par une torche à plasma d'un procédé POD en même temps qu'un gaz fluorant, le pourcentage (en poids) de fluor à incorporer dans la silice étant compris entre 0,3 % et 1,5 %.

## Claims

1. A method of manufacturing a silica powder by a sol-gel technique, in which:
a suspension of synthetic silica soot having a specific area of less than 80 m²/g is made in water to a concentration of 50% to 75% by weight of silica;
the said suspension is gelled;
the resulting gel is dried under microwaves;
the dry gel is broken up into grains of silica of diameter lying in the range 10 µm to 1 mm, having an apparent density of about 0.5 g/cm³ to 0.6 g/cm³, and a porosity of less than 20%; and
screening is performed between 100 µm and 500 µm.

2. A method according to claim 1, characterized by the fact that gelling is performed by heating said suspension to about 40°C, the resulting gel being dried under a vacuum in a microwave oven, and being broken up by grinding using Teflon balls or by cutting up using a helical screw.

3. A method according to claim 1 or 2, characterized by the fact that at least one dopant is added to said suspension as a soluble salt or an oxide in powder form, the dopant being selected from: titanium, magnesium, calcium, aluminum, barium, strontium, lead, and phosphorous.

4. A method according to any one of claims 1 to 3, characterized by the fact that said silica grains are densified in an oven by the following heat treatment:
temperature rise from 20°C to 800°C under oxygen at a rate lying in the range 300°C per hour to 500°C per hour; and
temperature rise from 800°C to a temperature T lying in the range 1250°C to 1350°C under an atmosphere of helium, with an isothermal pause for 1 hour to 5 hours at the temperature T, the density of the silica grains at the end of the heat treatment being about 2.2 g/cm³.

5. A method according to claim 4, characterized by the fact that an intermediate stage is provided in said heat treatment with treatment under chlorine or thionyl chloride at 800°C for a period lying in the range 0.5 hours to 2 hours, followed by treatment at about 1000°C to 1200°C for about 1 hour under oxygen or a mixture of helium and oxygen, for the purpose of eliminating Cl groups.

6. A method according to claim 4, characterized by the fact that a fluorine-containing gas is mixed with the helium, said gas being selected from SiF₄, CCl₂F₂, HF, SF₆, and NF₃, thereby incorporating 0.1% to 3% fluorine in said grains.

7. Use of a silica powder obtained by the method according to any preceding claim, characterized by the fact that the powder is projected on a primary preform by means of a POD method plasma torch.

8. Use of a silica powder obtained by the method according to claim 1 or 2, characterized by the fact that it is sprayed on a primary preform by a POD method plasma torch simultaneously with a fluorine-containing gas, the percentage by weight of fluorine to be incorporated in the silica lying in the range 0.3% to 1.5%.

## Patentansprüche

1. Herstellungsverfahren für ein Siliziumdioxidpulver durch eine Sol-Gel-Methode, bei dem
- synthetischer Siliziumdioxidpuder mit einer spezifischen Oberfläche unterhalb 80 m²/g und 50 bis 75 Gew.% Siliziumdioxid in Wasser suspendiert wird,
- diese Suspension geliert wird,
- das erhaltene Gel mit Mikrowellen getrocknet wird,
- das trockene Gel in Siliziumdioxid-Granulate eines Durchmessers zwischen 10 µm und 1 mm zerteilt wird, mit einer sichtbaren Dichte von etwa 0,5 g/cm³ bis 0,6 g/cm³ und einer Porosität von weniger als 20%,
- und dann Granulate zwischen 100 µm und 500 µm ausgesiebt werden.

2. Herstellungsverfahren nach Anspruch 1, dadurch gekennzeichnet, daß das Gelieren durch Aufheizen der Suspension auf etwa 40°C erhalten wird, daß dann das erhaltene Gel unter Vakuum und in einem Mikrowellenofen getrocknet und durch Zermahlen mit Hilfe von Teflonkugeln oder durch Zerschneiden mit Hilfe einer Spiralschraube zerteilt wird.

3. Herstellungsverfahren nach einem der Ansprüche 1 und 2, dadurch gekennzeichnet, daß zu dieser Suspension in Form von Oxidpulvern oder löslichen Salzen mindestens ein Dotiermittel hingezufügt wird, das unter Titan, Magnesium, Calcium, Aluminium, Barium, Strontium, Blei und Phosphor ausgewählt wird.

4. Herstellungsverfahren nach einem der Ansprüche 1 bis 3, dadurch gekennzeichnet, daß in einem Ofen eine Verdichtung der Siliziumdioxid-Granulate mit Hilfe der folgenden Wärmebehandlung durchgeführt wird:
- Temperaturanstieg von 20°C auf 800°C unter Sauerstoffatmosphäre mit einer Geschwindigkeit zwischen 300°C und 500°C pro Stunde,
- Temperaturanstieg von 800°C bis auf eine Temperatur T zwischen 1250°C und 1350°C in Heliumatmosphäre, mit einer isothermen Stufe von 1 bis 5 Stunden bei der Temperatur T, wobei die Dichte der Siliziumdioxid-Granulate am Ende der Wärmebehandlung etwa 2,2 g/cm³ beträgt.

5. Herstellungsverfahren nach Anspruch 4, dadurch gekennzeichnet, daß eine Zwischenphase bei 800°C in dieser Wärmebehandlung vorgesehen wird, mit einer Behandlung unter Chlor oder Thionylchlorid während einer Dauer zwischen 0,5 und 2 Stunden, gefolgt von einer Behandlung bei etwa 1000 bis 1200°C während ungefähr einer Stunde unter Sauerstoff oder einer Helium/Sauerstoff-Mischung, Cl-Gruppen zu entfernen.

6. Herstellungsverfahren nach Anspruch 4, dadurch gekennzeichnet, daß dem Helium ein fluorierendes Gas beigemischt wird, das aus SiF₄, CCl₂F₂, HF, SF₆ und NF₃ ausgewählt wird, um in die Granulate 0,1% bis 3% Fluor einzubringen.

7. Anwendung eines Siliziumdioxidpulvers, das durch das Verfahren gemäß einem der vorhergehenden Ansprüche erhalten wurde, dadurch gekennzeichnet, daß es mittels eines Plasmabrenners in einem POD-Verfahren auf einen primären Rohling aufgebracht wird.

8. Anwendung eines Siliziumdioxidpulvers, das durch das Verfahren gemäß einem der Ansprüche 1 und 2 erhalten wurde, dadurch gekennzeichnet, daß es mittels eines Plasmabrenners in einem POD-Verfahrens gleichzeitig mit einem fluorierenden Gas auf einen primären Rohling aufgebracht wird, wobei der (Gewichts-) Prozentsatz des in das Siliziumdioxid einzufügenden Fluors zwischen 0,3% und 1,5% liegt.
